# EUROPEAN PATENT SPECIFICATION

(11) **EP 0 440 589 B1**
(45) Date of publication and mention of the grant of the patent: **06.04.1994**
(21) Application number: 91830021.1
(22) Date of filing: 23.01.1991
(51) Int. Cl.: A01M 7/00

(54) **Device for washing containers, in particular containers for agricultural chemicals for use in a spraying machine**
Vorrichtung zum Reinigen von Behältern, insbesondere von Behältern für landwirtschaftliche Chemikalien zur Verwendung mit einer landwirtschaftlichen Feldspritze
Dispositif de nettoyage de récipients, en particulier des récipients pour les substances chimiques utilisées dans un pulvérisateur agricole

(30) Priority: 01.02.1990 IT 3554990 U
(43) Date of publication of application: 07.08.1991
(73) Proprietor: SIAPA Società Italo-Americana Prodotti Antiparassitari S.p.A., I-00198 Roma RM (IT)
(72) Inventor: Di Vincenzo, Vincenzo, I-00136 Roma RM (IT)
(74) Representative: Bazzichelli, Alfredo

(56) References cited:
- CH-A- 669 885
- DE-A- 2 401 764
- LM LANDBOUWMECHANISATIE, vol. 40, no. 12, December 1989, pages 16-19,Wageningen, NL; J. CRUCQ: "De nieuwe douven veldspuiten"
- LM LANDBOUWMECHANISATIE, vol. 40, no. 11, November 1989, pages 72-75,Wageningen, NL; A. PEETERS: "Reinigen verpakkingen"

## Description

The present invention refers to a device for washing containers, for agricultural chemicals, with recovery of the waste water, for use in spraying machines in general.

Up to date, containers for agricultural chemicals, after having been emptied of their product, were either thrown away, with harmful consequences for the environment due to pollution from the remains of product within them, or else underwent adequate washing both to avoid the problem mentioned above, and also for their recovery and re-use.

In the latter case, the waste water used for washing, was disposed of along with the dissolved residual product left sticking to the inside of the relative container before washing, with consequent waste of the product itself.

The object of the present invention is to provide a device for the washing of containers, in particular empty containers of agricultural chemicals the content of which had been used in spraying machines. This device is capable of performing in a surprisingly rational, practical and efficient manner the cleaning of said containers, and to permit, at the same time, the recovery of the waste water containing a certain quantity, even if only small, of the chemical product, thus avoiding waste thereof.

A device for washing containers, in particular empty containers for agricultural chemicals the content of which has been used in a spraying machine, including a tank to contain a diluted liquid mixture of agricultural chemical to be sprayed, a filter through which said chemical is introduced and pump means capable of feeding the mixture from the tank to the nozzles of said spraying machine, in which a hydraulic ejector is mounted on said tank and it comprises a suction chamber, in open fluid communication with said tank, an injection nozzle in said suction chamber to direct a jet of washing water into said tank, and a filling port for suction from the outside of said tank of flow of water and introduction thereof into said tank through said suction chamber characterized in that:
means for transferring the washing water from said container to the tank comprise said mouth of the container and said filter of the tank,
so that the washing water is sprinkled into the container and falls down into the tank through said mouth of the container and said filter;
a three-way valve is mounted on said hydraulic ejector and comprises an inlet for said washing water and a first outlet to direct this same washing water to said container of chemical to be washed, and a second outlet to said injection nozzle, said three-way valve being arranged so as to take either a first position in which said second outlet is closed or a second position in which said second outlet is open; said device being provided with
means for feeding said washing water to said inlet in said three-way valve; and
means for introducing said washing water into said container to be washed,
so that the residual chemical in the empty container to be washed is transferred to said tank to be used in a successive spraying operation.

The present invention will be further illustrated below by the description of one of its embodiments, with reference to the enclosed drawing, wherein:

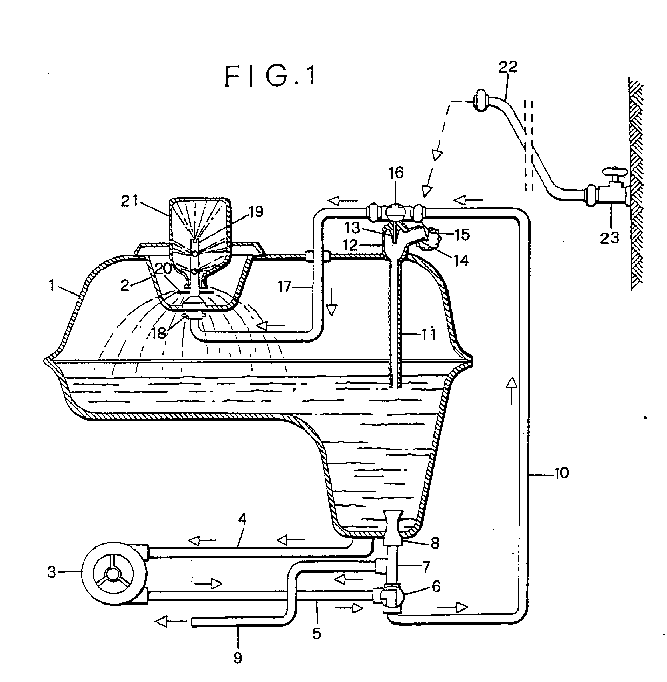

figure 1 is a side view, with parts in cross-section, of a first embodiment of the washing device of the invention.

With reference to figure 1, it has firstly to be noted that a conventional spraying machine is provided with a tank 1, containing a diluted liquid mixture of agricultural chemical to be sprayed, said tank having an upper opening for the introduction of the chemical to be used, on which is applied a filter 2. A pump 3 has its suction intake connected to the first end of a tube 4, the second end of which is connected in fluid communication to the bottom of the tank 1. The outlet of the pump 3 is connected to the first end of a tube 5, the second end of which is connected to a switch valve 6, capable of being switched, preferably by means of a remote control, from a first position to a second position. The first position puts into communication the tube 5 and a section of tube 7 for the activation of a hydraulic agitator 8, said agitator having the function of maintaining in constant agitation the chemical solution in the tank 1 to ensure its homogeneity, and, at the same time, for feeding by means of a tube 9 the distribution valves of the machine (not illustrated) to perform the spraying. The second position, as illustrated in figure 1, puts the tube 5 into communication with a first end of a tube 10. The second end of the tube 10 is connected, in conventional spraying machines, directly to a hydraulic ejector 11 so arranged as to create a pressure drop in an upper suction chamber 12, due to a flowing of liquid through an injection nozzle 13. This provides suction into tank 1 of the liquid to be poured in, for example from a basin, through a flexible tube (not shown), connected to a filling port 14 leading to the hydraulic ejector 11. This filling port has a closure plug 15, and the other end of the flexible tube is dipped in the basin.

According to the present invention, at the inlet of the ejector 11 a three-way valve 16 is installed, capable of being switched, preferably by means of a remote control from a first to a second position. The three-way valve 16 has an inlet in communication with the tube 10, a first outlet in communication with a tube 17 and a second outlet in communication with the hydraulic ejector 11. In the first position, illustrated in figure 1, the communication between the hydraulic ejector 11 and the tube 10 is blocked and the tube 10 is in fluid communication with a first end of the tube 17, to perform the washing operation in a manner that will be better described herebelow. In the second position the tube 10 is put into communication with the hydraulic ejector 11, while maintaining the communication between tube 10 and tube 17.

The other end of tube 17 is connected to a normally closed valve 18 on the bottom of the filter 2. When the valve is closed the flow of washing liquid is blocked. When the valve is open, a flow communication is established to a sprinkler 19 extending vertically above the valve 18, in communication with the outlet of the valve 18.

The function of valve 18 is controlled by an actuator 20 which closes the valve when in a state of rest, and opens the valve when a container 21 of agricultural chemical to be washed is placed upon it in an upsidedown position with the sprinkler 19 inside, as shown in figure 1.

The washing operation of an agricultural chemical container according to the above described embodiment of the invention is performed in the following manner: a certain quantity of clean water is drawn into the tank 1; the switch valve 6 and the three-way valve 16 are placed respectively in said second and said first position, as illustrated in figure 1; the pump 3 is set into motion in order to circulate the water contained in the tank 1 through the tubes 4, 5, 10, 17 until reaching the inlet of valve 18; the agricultural chemical container 21 is placed in an upsidedown position on filter 2 and held there, with the sprinkler 19 inside it, in such a way as to press the control actuator 20 so as to open the valve 18 and produce jets of water through the holes provided in the sprinkler 19. Thus the washing of the container 21 is performed, while the waste water runs out of the container 21. The waste water contains, dissolved therein, the remains of the chemical which had been left within the container 21 itself after emptying. The waste water falls back into the tank 1 through the filter 2, and it can be re-used in the agricultural treatments, obviously after addition of an adequate amount of agricultural chemical, to restore the mixture to the desired dosage.

In an alternative method of performing the washing operation in question using the device of the invention described above, the three-way valve 16, in the first position illustrated in figure 1, is disconnected from the relative end of the tube 10, and connected to one end of a tube 22, preferably of a flexible type, the opposite end of which is connected to a water supply by means of a tap 23.

In said alternative method, the performance of the washing operation takes place in the same manner as that described in precedence, however without any intervention of pump 3. It should be noted that, using the latter method, although it is less simple and practical, the washing of container 21 will be more thorough, in that it is carried out using water from the mains water supply, which is always clean, whereas in the former case the water in tank 1 is constantly re-cycled by the pump 3, so that after washing a first container 21 the residue of its agricultural chemical is present in tank 1.

## Claims

1. A device for washing containers, in particular empty containers for agricultural chemicals the content of which has been used in a spraying machine, including a tank (1) to contain a diluted liquid mixture of agricultural chemical to be sprayed, a filter (2) through which said chemical is introduced and pump means (3) capable of feeding the mixture from the tank to the nozzles of said spraying machine in which a hydraulic ejector (11) is mounted on said tank and it comprises a suction chamber (12), in open fluid communication with said tank, an injection nozzle (13) in said suction chamber to direct a jet of washing water into said tank, and a filling port (14) for suction from the outside of said tank of a flow of water and introduction thereof into said tank through said suction chamber characterized in that:
means for transferring the washing water from said container to the tank comprise the mouth of the container and the filter of the tank,
so that the washing water is sprinkled into the container and falls down into the tank through said mouth of the container and said filter;
a three-way valve (16) is mounted on said hydraulic ejector and comprises an inlet for said washing water and a first outlet to direct this same washing water to said container (21) of chemical to be washed, and a second outlet to said injection nozzle, said three-way valve being arranged so as to take either a first position in which said second outlet is closed or a second position in which said second outlet is open;
said device being provided with
means for feeding said washing water to said inlet in said three-way valve; and
means for introducing said washing water into said container to be washed,
so that the residual chemical in the empty container to be washed is transferred to said tank to be used in a successive spraying operation.

2. A device as claimed in claim 1, in which said means for introducing said washing water into said container comprise:
said three-way valve in said first position;
a tube (17) having one of its ends connected in fluid communication with said first outlet of the three-way valve and passing from the outside to the inside of said tank;
a normally closed valve (18) mounted on said filter (2) of the tank, having an inlet connected in fluid communication with the other end of said above mentioned tube (17), and an outlet;
a sprinkler (19) connected in fluid communication with the outlet of said normally closed valve; and
a control actuator (20) which opens said normally closed valve following the placing of said container in an upside-down position on said actuator with said sprinkler in the inside of said container through the mouth thereof.

3. A device as claimed in claim 1 or 2, in which said means for feeding said washing water to said inlet of said three-way valve comprise:
a switch valve (6) placed in the outlet tube (5) of said pump means (3) and having an inlet adapted to be alternatively switched to one or the other of two outlets;
a tube (7) which connects in fluid communication one of said outlets of said switch valve with the inside of the tank for a spraying operation;
a tube (10) which connects in fluid communication the other outlet of the switch valve with the inlet of the three-way valve to carry out the recycling of said washing water by means of operation of said pump means.

4. A device as claimed in claim 1 or 2, in which said means for feeding said washing water to said inlet of said three-way valve comprise a tube (22) which connects in fluid communication an outside pressure water supply with the inlet of said three-way valve.

5. A device as claimed in claims 1 to 3, in which a tube dipped in an outside water supply at an atmosphere pressure is connected to said filling port (14) of said suction chamber, so that water can be drawn into the tank following operation of said pump means.

## Patentansprüche

1. Vorrichtung zur Reinigung von Behältern, insbesondere von leeren Behältern für Pflanzenschutzmittel deren Inhalt in einer Spritzmaschine benutzt wurde, bestehend aus einem Tank (1), der eine verdünnte flüssige Lösung von spritzbaren Pflanzenschutzmitteln enthält, einem Filter (2) durch den das Schutzmittel eingeführt wird und einer Pumpeinrichtung (3), die die Mischung aus dem Tank zu den Düsen der Spritzmaschine leitet, wobei auf dem Tank ein Hydroejektor (11) angebracht ist,
einer Ansaugkammer (12), in offener Fluidverbindung mit dem Tank,
einer Einspritzdüse (13) in der Ansaugkammer, die einen Waschwasserstrahl in den Tank richtet,
und einem Füllverschluß (14) der einen Wasserfluß außerhalb des Tankes ansaugt, und ihn durch die Ansaugkammer in den Tank einführt, dadurch gekennzeichnet daß:
die Einrichtungen, die das Waschwasser aus dem Behälter in den Tank leiten die Behältermündung und den Filter des Tankes enthalten,
so daß das Waschwasser in den Behälter zerstäubt wird und durch die Behältermündung und durch den Filter in den Behälter fällt;
ein Dreiwegventil (16) auf den Hydroejektor montiert ist und einen Eingang für das Waschwasser und einen ersten Ausgang der dasselbe Waschwasser in den von Chemikalien zu reinigenden Behälter (21) leitet, enthält, und einen zweiten Ausgang in Richtung der Einspritzdüse, wobei die Anordnung des Dreiwegventils entweder eine erste Position, bei der der zweite Ausgang geschlossen ist, oder eine zweite Position bei der der zweite Ausgang geöffnet ist, einnehmen kann;
wobei die Vorrichtung mit
Einrichtungen die das Waschwasser zum Einlaß des Dreiwegventils leiten; und
Einrichtungen die das Waschwasser in den zu reinigenden Behälter leiten versehen ist, so daß die in dem leeren zu reinigenden Behälter ungelösten Chemikalien in den Tank geleitet werden, um in einem späteren Spritzvorgang benutzt zu werden.

2. Vorrichtung nach Anspruch 1, mit Einrichtungen, die das Waschwasser in den Behälter führen, bestehend aus
- einem Dreiwegventil in der ersten Position;
- einem Rohr (17),dessen erstes Ende in Fluidverbindung mit dem ersten Ausgang des Dreiwegventils steht, und von der Außenseite in das Innere des Tankes reicht;
einem normalerweise geschlossenen Ventil (18), welches an dem Filter (2) des Tankes angebracht ist, und einen in Fluidverbindung mit dem zweiten Ende des Rohres (17) stehenden Eingang, und einen Ausgang hat;
einer Zerstäubungseinheit (19), die in Fluidverbindung mit dem Ausgang des normalerweise geschlossenen Ventils steht; und
einem Kontrollantrieb (20), der das normalerweise geschlossene Ventil öffnet, nachdem der Behälter in umgekehrter Stellung auf den Antrieb gebracht wurde, wobei sich der Zerstäuber durch die Mündung des Behälters, in dessem Inneren befindet.

3. Vorrichtung nach Anspruch 1 oder 2, mit Einrichtungen, die das Waschwasser zum Einlaß des Dreiwegventils leiten, bestehend aus:
- einem Schaltventil (6) innerhalb des Ausgangrohres (5) der Pumpeinrichtungen (3), das einen Einlaß hat, der abwechselnd auf den einen oder den anderen der zwei Ausgänge eingestellt werden kann
- einem Rohr (7), das einen der Ausgänge des Schaltventils in Fluidverbindung mit dem Inneren des Tankes verbindet, um das Zerstäubungsverfahren durchzuführen;
- einem Rohr (10) welches die Fluidverbindung vom anderen Ausgang des Schaltventils zum Einlaß des Dreiwegventils herstellt, zur Wiederverwendung des Waschwassers bei Betätigung der Pumpeinrichtung.

4. Vorrichtung nach Anspruch 1 oder 2, mit Einrichtungen, die das Waschwasser zum Einlaß des Dreiwegvenrils leiten, bestehend aus einem Rohr (22), das einen externen, unter Druck stehenden Wasserversorger in Fluidverbindung mit dem Einlaß des Dreiwegventils bringt.

5. Vorrichtung nach den Ansprüchen 1 bis 3, worin ein Rohr, das in einen unter atmosphärischen Druck stehenden externen Wasserversorger getaucht ist, mit dem Füllverschluß (14) der Ansaugkammer in Verbindung steht, so daß das Wasser infolge des Betriebes der Pumpeinrichtungen in den Tank geleitet werden kann.

## Revendications

1. Appareil pour laver des récipients, en particulier des récipients vides pour des produits chimiques, dont le contenu a été utilisé dans une machine à pulvériser, comprenant un réservoir (1) qui contient un mélange liquide dilué de produit chimique à pulvériser, un filtre (2) à travers lequel le dit produit est introduit et des moyens à pompe (3) aptes à envoyer le mélange du réservoir à la buse de la machine à pulvériser, une pompe à éjecteur (11) étant montée sur le réservoir et celle-ci comprend une chambre d'aspiration (12) en communication ouverte de flux avec le dit réservoir, un gicleur à injection (13) dans la dite chambre d'aspiration pour diriger un jet d'eau de lavage dans le réservoir, et une ouverture de remplissage (14) pour aspirer de l'extérieur du réservoir un flux d'eau et l'introduire dans le réservoir à travers la dite chambre d'aspiration, caractérisé en ce que:
des moyens pour transférer l'eau de lavage du récipient au réservoir comprennent la bouche du récipient et le filtre du réservoir, de façon à ce que l'eau de lavage soit arrosée à l'interieur du récipient et tombe dans le réservoir à travers la dite bouche du récipient et le dit filtre;
une soupape à trois voies (16) est montée sur la dite pompe à éjecteur et comprend une entrée pour l'eau de lavage et un premier orifice de sortie pour diriger la même eau de lavage vers le récipient (21) de produit chimique qui doit être lavé, et un second orifice de sortie vers le dit gicleur à injection, la dite soupape à trois voies étant disposée de façon à prendre une première position où le dit second orifice de sortie est fermé ou une seconde position où le dit second orifice de sortie est ouvert;
le dit appareil étant pourvu de
moyens pour alimenter l'eau de lavage à l'entrée de la dite soupape à trois voies; et
moyens pour introduire l'eau de lavage dans le récipient qui doit être lavé,
de façon à ce que le produit chimique résiduel dans le récipient vide qui doit être lavé soit transféré au réservoir pour être utilisé dans une successive opération de pulvérisation.

2. Appareil selon la revendication 1, où les dits moyens pour introduire l'eau de lavage dans le récipient comprennent:
la dite soupape à trois voies en sa première position;
un tuyau (17) ayant une des ses extrémités reliée en communication de flux avec le dit premier orifice de sortie de la soupape à trois voies et qui passe de l'extérieur à l'intérieur du réservoir;
une soupape normalement fermée (18) montée sur le dit filtre (2) du réservoir, ayant une entrée reliée en communication de flux avec l'autre extrémité du tuyau (17) sus-mentionné, et un orifice de sortie;
un pulvérisateur (19) relié en communication de flux avec l'orifice de sortie de la dite soupape normalement fermée, et
un organe de commande (20) qui ouvre la soupape normalement fermée lorsque le récipient est placé en position renversée sur le dit organe de commande avec le pulvérisateur à l'intérieur du récipient à travers sa bouche.

3. Appareil selon les revendications 1 ou 2, où les moyens pour alimenter l'eau de lavage à l'entrée de la dite soupape à trois voies comprennent:
une soupape de commutation (6) placée dans le tuyau de sortie (5) des moyens à pompe (3) et ayant une entrée apte à être commutée alternativement vers l'une ou l'autre des dits orifices de sortie;
un tuyau (7) qui relie en communication de flux un des dits orifices de sortie de la soupape de commutation avec l'intérieur du réservoir pour une opération de pulvérisation;
un tuyau (10) qui relie en communication de flux l'autre orifice de sortie de la soupape de commutation avec l'entrée de la soupape à trois voies pour permettre le recyclage de l'eau de lavage au moyen de l'opération des dits moyens à pompe.

4. Appareil selon la revendication 1 ou 2, où les dits moyens pour envoyer l'eau de lavage à la dite entrée de la soupape à trois voies comprennent un tuyau (22) qui relie en communication de flux une source extérieure d'eau sous pression avec l'entrée de la soupape à trois voies.

5. Appareil selon les revendications 1 à 3, où le tuyau plongé dans une source extérieure 2 à la pression d'une atmosphère est relié à la dite ouverture (14) de remplissage de la chambre d'aspiration de façon à ce que l'eau puisse être aspirée dans le réservoir par effet de l'opération des dits moyens à pompe.
